# EUROPEAN PATENT APPLICATION

(11) **EP 1 895 241 A2**
(43) Date of publication of application: **05.03.2008**
(21) Application number: 07253378.9
(22) Date of filing: 28.08.2007
(51) Int. Cl.: F24D 11/02

(54) **Method and system for accumulating heat energy**

(30) Priority: 28.08.2006 NO 20063814
(71) Applicant: CTC FerroFil AS, 2151 Arnes (NO)
(72) Inventor: Sydtangen, Thore, 2170 Fenstad (NO)
(74) Representative: Briddes, Sam

(57) **Abstract**

This invention relates to a method for accumulating heat energy and accumulators for use as hot water supply and/or heating in buildings. The method comprises collecting heat energy from one or more energy sources, transferring the collected heat from each energy source to a corresponding energy carrying fluid, transporting the collected heat by use of the one or more energy carrying fluids to an accumulator vessel containing a thermal layered accumulator liquid at one or more temperature levels, transferring the collected heat energy to the accumulator liquid by heat exchanging each of the one or more energy carrying fluids with accumulator liquid at the thermal layer with a moderately lower temperature than the energy carrying fluid's temperature, and when supplying accumulated heat energy to the user: heat exchanging heated accumulator liquid with an energy carrier that transfers the heat energy to the user in the form of hot tap water and/or liquid borne heating. The accumulator comprises means for collecting heat energy from one or more energy sources, means for forming at least one energy collection fluid circuit for each energy source, means for transferring the collected heat from each energy source to the energy carrying fluid in the corresponding energy collection circuit(s), an accumulator vessel with a thermal layered accumulator liquid, means for heat exchange the one or more energy carrying fluids of the collector circuit accumulator liquid at the thermal layer with a moderately lower temperature than the energy carrying fluid, and means for extracting hot accumulator liquid from the accumulator vessel, heat exchanging it with one or more user energy carrying liquids, and injecting the heat exchanged accumulator fluid into the accumulator vessel into a thermal layer with more or less the same temperature as the heat exchanged accumulator liquid.

## Description

This invention relates to a method and system for accumulating heat energy, and accumulators for use as hot water supply and/or heating in buildings.

### Background

The present focus on energy prices and supply security have made alternative energy sources attractive for supplying households, office buildings, industrial buildings etc. with heated tap water and/or hot water for heating the buildings.
These energy sources may he solar heat captors, heat pumps, spill heat from industry and combustion plants, biofuels, etc. which heats an energy carrier. The energy carrier transfers the heat energy to the user points, which may be hot water accumulators, tap water radiators, waterborne floor heating, etc.

It may be advantageous combining these alternative energy sources with the more commonly used fossil fuel combustion and net grid electricity.

### Prior art

NO 302 054 discloses a water heater for households comprising a standing accumulator (storage tank) where water is stored in thermal layers with the hottest, the lightest, water at the top. An external flow circuit containing an electric resistance heater sucks cold water from the lower part of the accumulator, heats it to the intended temperature and injects it at the upper part of the accumulator. The flow in the external flow circuit is controlled by a heat sensitive valve which opens when the water in the flow circuit has reached the intended temperature. A water supply pipe supplies new water to the lower part of the accumulator, and a water pipe retracts hot consumer water from the upper part of the accumulator. This accumulator is only able to use electricity as energy source.

### Objectives of the invention

One objective of this invention is to provide a method for accumulating heat energy from two or more energy sources at different temperature levels for use in households and other buildings.
Another objective of this invention is to provide a heated water accumulator with a closed accumulator liquid circuit that may accumulate energy from two or more energy sources at different temperature levels for use in households and other buildings.
The objectives of the invention may be obtained by the features as set forth in the following description of the invention, and/or in the appended claims.

### Description of the invention

The invention is based on the realisation that by employing thermal layering in the accumulator it becomes possible to accumulate heat energy from low temperature energy sources or alternatively extract more energy from high temperature energy sources, and that by employing a closed circuit for the accumulator liquid the problems with biological activity, corrosion, and scaling in the accumulator and corresponding circuits for accumulator liquid, may be practically eliminated.

Thus in a first aspect, the invention relates to a method for accumulating heat energy for supplying buildings with hot tap water and/or liquid borne heating, wherein the method comprises:
- collecting heat energy from one or more energy sources,
- transferring the collected heat from each energy source to a corresponding energy carrying fluid,
- transporting the collected heat to an accumulator vessel containing a thermal layered accumulator liquid at one or more temperature levels by use of the one or more energy carrying fluids,
- transferring the collected heat energy to the accumulator liquid by heat exchanging each of the one or more energy carrying fluids with accumulator liquid at the thermal layer with a moderately lower temperature than the energy carrying fluid's temperature,
   and when supplying accumulated heat energy to the user(s);
- heat exchanging heated accumulator liquid with heat transporting fluid(s) that transfers the heat energy to the user(s).

In a second aspect, the invention relates to accumulators for accumulating heat energy for supplying buildings with hot water and/or liquid borne heating, wherein the accumulators comprises:
- means for collecting heat energy from one or more energy sources,
- means for forming at least one energy collection fluid circuit for each energy source,
- means for transferring the collected heat from each energy source to the energy carrying fluid in the corresponding energy collection circuit(s),
- an accumulator vessel with a thermal layered accumulator liquid,
- means for heat exchange the one or more energy carrying fluids of the collector circuit accumulator liquid at the thermal layer with a moderately lower temperature than the energy carrying fluid,
   and for provision of heat energy to the user(s):
- means for extracting hot accumulator liquid from the accumulator vessel, heat exchanging it with one or more heat transporting fluid(s), and then returning the heat exchanged accumulator fluid into the accumulator vessel at a thermal layer with a moderately lower temperature as the returned heat exchanged accumulator liquid.

The term "thermal layering" as used herein means a fluid phase where temperature induced density differences in the fluid is exploited to store the accumulator liquid at one or several temperature intervals. The hottest thermal layer will have the smallest density and lay itself on top of the remaining colder liquid, while the coldest liquid will have the highest density and lay itself on the bottom below the remaining hotter liquid. There may be from zero to a number of intermediate thermal layers in-between the top and bottom layer. The temperature profile in the vertical direction of the thermally layered liquid may be from a more or less even (smooth) increase towards the hottest top liquid to a more stepwise increase between the layers. The characterising feature of a thermally layered liquid is that there is a temperature profile where the hottest liquid is on top and the coldest on the bottom, and the liquid phase is stable in the sense that there is no significant vertically oriented thermal convection in the bulk liquid.

In addition to the benefit of allowing utilising energy sources which provide energy carriers with temperatures below the relatively high temperature required by the end-users, the thermal layering also offers the benefit of increased consumer comfort since heat energy will be available shortly after the accumulator has been emptied. Accumulating liquid heated to the end-user temperature will be stored in the actual thermal layer in the accumulator vessel, and thus become more or less immediately available for the end-user. In accumulator vessels without thermal layering, heated accumulator liquid will induce convection flows in the accumulator liquid which homogenises the temperature in the vessel. Thus in summary: the feature of thermal layering in the accumulator vessel provides a competitive advantage for applications such as water heaters, water borne heating systems etc. in that low temperature energy sources may be applied for loading the accumulator, in that a larger portion of the heat energy of high temperature energy sources may be transferred to the accumulator, and in that the user will regain hot water and/or liquid borne heating shortly after periods with temporarily high loads that emptied the accumulator.

The term "moderately lower temperature" as used herein means that the temperature difference between fluids used for loading (heating) a thermal layer is sufficiently high to allow heat transfer from the heat loading fluid to the accumulator fluid of the thermal layer, and at the same time sufficiently low to avoid inducing detrimentally strong vertically oriented thermal convection in the accumulator vessel which may destroy the thermal layering. The same applies when reintroducing heat exchanged accumulator liquid from the circuits providing heat energy to the user(s). The temperature of the thermal layer in which the used accumulator liquid is injected into, must be sufficiently close to the temperature of the returned liquid to avoid detrimental vertically oriented thermal convection in the accumulator vessel. Thus in practice, a moderately lower temperature will usually mean a temperature difference from close to 0 °C to up to about 10 - 15 °C when using water as the accumulator liquid. Other liquids may have a different window of suitable temperature differences (depending on the liquids coefficient of thermal expansion) without danger of introducing detrimental thermal convection in the accumulator vessel.

The term "energy source" as used herein means any presently conventional or future conceivable energy source which may be utilised to heat an energy carrier fluid to a temperature suited for loading (warming up) one or more thermal layers in the accumulator according to the invention. Advantageously, the invention should have access to at least one high energy source for loading the hot top thermal layer in the accumulator vessel. However it is possible to employ a low temperature energy source and then lift the temperature of the energy carrying fluid by use of a heat pump, such that access to a high temperature energy source is not mandatory. Further, the invention may advantageously employ more than one energy source at different temperatures. This gives a flexible energy supply which allows exploiting different energy sources at optimum times. For example, solar heat is available in daytime, electricity is in some markets cheaper at night, heat pumps may have optimum periods due to variations in the ambient outdoor temperature, in some places industrial waste heat may be available at specific times etc. There is no limitation for choice of energy source as long as the energy sources are able to provide energy carrying fluids with a temperature from about 20 °C up to about 95 °C, preferably from about 40 °C to about 75 °C. Such energy sources may be solar ray collectors, any conceivable type of heat-pump (feeding on air, water and/or ground heat), conventional boilers, industrial waste heat, long distance heat systems, electricity etc.

The term "energy carrying fluid" as used herein means any fluid that runs in one of the energy collecting fluid circuits. The term "energy collecting fluid circuits" mean closed circuits running to and from the energy sources (where the energy carrying fluid is loaded with heat energy) and the heat exchangers for loading the thermal layers in the accumulator liquid (where the energy carrying fluids delivers the collected heat energy to the accumulator liquid). The energy carrying fluid may be any fluid, including gases. However, it is advantageous to use liquids with a relatively high thermal conductivity and heat capacity in order to allow high heat transport capacities at relatively low flow volumes and heat exchanger surfaces. Refrigerant coolants are ideal examples of liquids suited for use as energy carrying fluids in this invention. Another well suited liquid is water, due to its large heat capacity.

The term "closed circuit" as used herein means that the circuit is isolated in the sense that there is no direct physical contact of the fluid in the closed circuit with fluids from other circuits in the system. Heat contents must be transferred to and from a liquid in a closed circuit by convection through an intermediate phase, such as a heat exchanger plate etc.

The term "accumulator liquid" as used herein means any liquid to be used as the energy accumulating liquid in the accumulator vessel. It is an advantage that the accumulator liquid has a relatively low thermal conductivity in order to allow thermal layering, and at the same time a sufficiently high thermal capacity to allow storing a practical amount of thermal heat. From the applicant's Norwegian patent NO 302 054, it is known that water will function well as the accumulator liquid in accumulators with thermal layering. But any kind of liquid with an adequately high heat capacity and which is not corrosive towards the accumulator vessel and auxiliary equipment may be used, including refrigerant liquids, liquid salt mixtures, etc. Adequately high heat capacity means a heat capacity of at least the same order as water or higher.

Due to use of relative low temperature layers in lower part of the accumulator, there might be problems with unwanted bacterial activity since the relative low temperature layers typically will have temperatures below the pasteurising temperature. For example the bacteria family legionellacease is known to create occasional but very serious health hazards in water systems because they thrive in temperatures in the range from 20 to about 50 °C. The problem with legionellacease and most other unwanted biological activities in the accumulator is solved by keeping the accumulator liquid in a closed circuit. That is, the accumulator liquid is isolated from the user in the sense that tap water is heat exchanged with hot accumulator liquid. These liquids cannot mix; all energy transfer between them must take place via convection through an intermediate phase such as a heat exchanger plate etc. The energy carrying fluids of the collector circuits may also advantageously be isolated from the accumulator liquid, such that all energy transport to and from the accumulator liquid, must take place via convection through an intermediate phase such as a heat exchanger plate etc. However, it is also envisioned that one or more energy collection circuits may be integrated with the accumulator circuit; in this case the relatively cold accumulator liquid is extracted from the accumulator vessel, passed to the energy source, heated up and reintroduced at the thermal layer of a moderately lower temperature. Circuits for liquid borne heating may also be integrated with the accumulator vessel in the same manner; hot accumulator liquid is extracted from the accumulator, passed through the liquid borne heating system and reintroduced into the accumulator vessel at the thermal layer of a moderately lower temperature.

The isolation of the accumulator liquid in a closed circuit means that the liquid will be separated from ambient atmosphere, have no direct physical contact with other liquids, and will neither be consumed nor replenished. Thus the accumulator liquid will become oxygen deficit shortly after being filled into and sealed inside the accumulator liquid circuit. The lack of oxygen in the accumulator liquid will solve the problem with biological activity and most corrosion problems. The problem with scaling will also be solved due to the same reasons. A further advantage is that the use of closed circuits allows use of water heaters with other liquids than water, since the consumers hot water is produced by heat exchanging the consumer water against the accumulator liquid. Thus the feature of employing a closed accumulator liquid circuit is considered a vital feature of this invention.

The term "liquid borne heating" as used herein means any conventional system for heating buildings, where a heat transporting fluid is passed in a circuit from the energy accumulator to one or more devices for delivering the heat energy to the building. These devices may be any conventional equipment for transferring heat from the heat transporting fluid to rooms and other parts of the buildings, such as radiant floor heating, radiator heating systems, fan-coils etc. The heat may be delivered from the accumulator to the liquid borne heating system by heat exchanging accumulator liquid with heat transport liquid of the heating circuit. This solution allows use of different liquids as heat transport liquid and accumulator liquid, respectively. This might be useful in e.g. cold climates; by using an anti-freeze solution as the heat transporting liquid, the problem with possible frost damages of the heating system in case of power failure etc. will be practically eliminated.

The term "heat transporting fluid" as used herein means any fluid that is used to transport heat energy from the accumulator vessel to the users. This term is primarily chosen to avoid confusion with the term "energy carrying fluid" of the collector circuits. The invention may apply similar fluids in the collector circuits and the liquid borne heating system, or it may apply different fluids in these two systems. The energy carrying fluids and the heat transporting fluids are contained in separate and isolated circuits, they cannot be mixed. The heat transporting fluids will usually comprise fresh water that is supplied on demand by the user: For example; when the user opens a hot water tap, fresh cold water enters a heat exchanger where it is warmed by heat exchange with hot accumulator liquid before it continues to the hot water tap. In addition the heat transporting fluids may comprise fluids for use in liquid borne heating systems. As mentioned, the fluids in the liquid borne heating system may be isolated from or integrated with the accumulator liquid, and any liquid suitable as accumulator liquid and energy collection liquid may be applied. Examples of suitable liquids are water, anti-freeze solutions, refrigerants coolants, etc.

The solution with integrating the liquid borne heating system directly to the accumulator vessel avoids use of heat exchangers for transferring heat from the accumulator to the heating system, and is advantageous for applications where frost damage is not considered to be a problem:

In a third aspect, the invention relates to a method for accumulating heat energy for supplying buildings with hot tap water and/or liquid borne heating, wherein the method comprises:
- collecting heat energy from one or more energy sources,
- transferring the collected heat from each energy source to a corresponding energy carrying fluid,
- transporting the collected heat by use of the one or more energy carrying fluids to an accumulator vessel containing a thermal layered accumulator liquid at one or more temperature levels,
- transferring the collected heat energy to the accumulator liquid by heat exchanging each of the one or more energy carrying fluids with accumulator liquid at the thermal layer with a moderately lower temperature than the energy carrying fluid's temperature, and when supplying accumulated heat energy to the user(s):

- heat exchanging heated accumulator liquid from the top thermal layer with fresh water for provision of hot tap water and then returning the heat exchanged accumulator liquid to the accumulator vessel at the bottom or intermediate thermal layer with a moderately lower temperature than the returned accumulator liquid, and
- extracting accumulator liquid from an intermediate and/or top layer of the accumulator, passing it to the liquid borne heating system for provision of heating of the building, and then returning the used accumulator liquid to the accumulator at the bottom or intermediate thermal layer with a moderately lower temperature than the returned accumulator liquid.

In a fourth aspect, the invention relates to accumulators for accumulating heat energy for supplying buildings with hot water and/or liquid borne heating, wherein the accumulators comprises:
- means for collecting heat energy from one or more energy sources,
- means for forming at least one energy collection fluid circuit for each energy source,
- means for transferring the collected heat from each energy source to the energy carrying fluid in the corresponding energy collection circuit(s),
- an accumulator vessel with a thermal layered accumulator liquid,
- means for heat exchange the one or more energy carrying fluids of the collector circuit accumulator liquid at the thermal layer with a moderately lower temperature than the energy carrying fluid, and for provision of heat energy to the user(s):

- means for extracting hot accumulator liquid from the top thermal layer, heat exchange this accumulator liquid with fresh water for provision of hot tap water, and then returning the heat exchanged accumulator liquid to the accumulator vessel at a thermal layer with a moderately lower temperature as the returned accumulator liquid, and
- means for extracting accumulator liquid vessel from an intermediate and/or top thermal layer of the accumulator vessel, passing the extracted accumulator liquid to the liquid borne heating system for provision of heating of the building, and then returning the used accumulator liquid to the accumulator at the bottom or intermediate thermal layer with a moderately lower temperature than the returned accumulator liquid.

All four aspects of the invention may also comprise one or more additional storage vessels for accumulating liquid. This gives the possibility for heating larger buildings, providing a more flexible load capacity, and for storing heat energy for use at later times. The storage vessels should advantageously be connected in series to the accumulator vessel, and thus be integrated in the closed accumulator liquid circuit. However, it is also envisioned that the storage vessels are loaded and tapped by heat exchanging the liquid in the storage vessels with accumulator liquid. In the latter case, the storage vessel liquid is isolated from the accumulator liquid, i.e. not forming a part of the closed accumulator liquid circuit.

### List of figures

Figure 1 is a schematic view of an accumulator vessel and one possible configuration of energy sources according to a first embodiment of the invention.
Figure 2 is a schematic view of an embodiment of a flow regulation valve for use in the embodiments shown in fig. 1 or 5.
Figure 3 A-D are temperature diagrams showing how the embodiment in fig. functions with and without a minimum flow through the valve shown in fig.2,
Figure 4 is a schematic view of an embodiment of the invention with a series of storage vessels,
Figure 5 is a schematic view of a second embodiment of the system shown in figure 1.

### Embodiments of the invention

The invention will be described in more detail by way of examples of embodiments of the invention. These embodiments should not be considered as limiting the scope of the invention. They are merely examples of how to obtain heat energy accumulators with the combined feature of thermal layering and closed accumulator circuit.

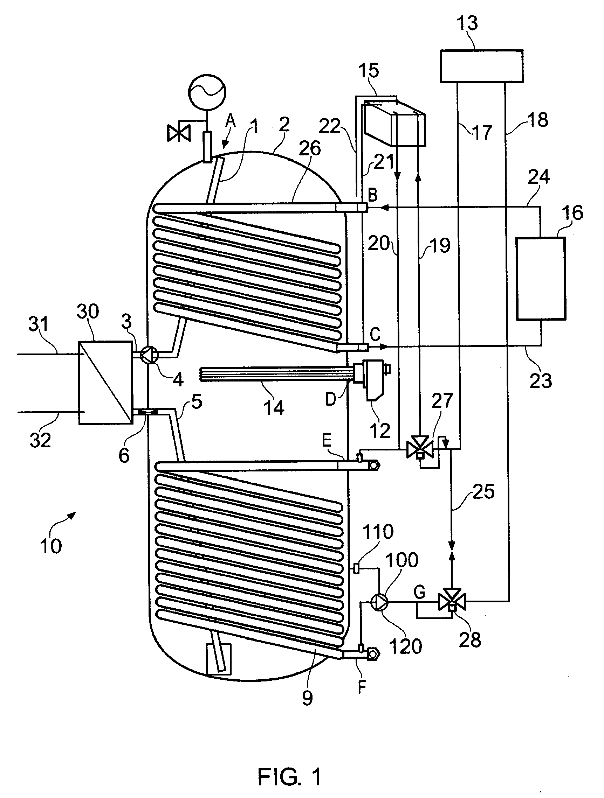

The embodiment shown in figure 1 has three separate liquid circuits:
1) one accumulating liquid circuit comprising an accumulator vessel 2, a pipe 1 for supplying hot accumulating liquid from the upper part of the vessel 2 to a hot liquid outlet 3, pump 4 for pumping accumulator liquid through pipe 1, pipe 5 for returning heat exchanged (cold) accumulating liquid from cold liquid inlet 6 to the bottom part of vessel 2, heat sensitive valve 6 for controlling the flow through pipe 5, and one circuit of heat exchanger 30;
2) one tap water circuit comprising fresh water intake 32, the other circuit of heat exchanger 30, and hot water outlet 31; and
3) heat collection circuits comprising energy sources 12, 13, 15, 16, heat transfer devices (pipes 17 to 25 and heat exchangers 9 and 26), and flow control devices (heat sensor 110, pump 120 and valves 27, 28).

The embodiment according to figure 1 employs four energy sources:
- One electric heating element 12 with coil 14 placed at level D in the accumulator vessel 2,
- one solar ray heater 13 connected to heat exchanger 9 via pipes 17, 18,
- one heat pump 15 with hot gas circuit connected to heat exchanger 26 via pipes 21, 22 and hot liquid circuit connected to heat exchanger 9 via pipes 19, 20, and
- one boiler 16 connected to heat exchanger 26 via pipes 23, 24.

The heat exchanger 26 is placed between level B and C of the accumulator vessel 2, and is used to load the upper thermal layer(s) of the accumulator vessel 2. Hot energy carrying fluid of about 65-70 °C is introduced into the accumulator vessel 2 at level B, travels through the heat exchanger 26 and exits the accumulator vessel 2 at level C. The heat exchanger 26 may be loaded by energy carrier fluid from boiler 16 and/or with energy carrier fluid from the hot gas circuit of heat pump 15.

The heat exchanger 9 is placed between level E and F of the accumulator vessel 2, and is used to load the lower thermal layer(s) of the accumulator vessel 2. Mediate temperate energy carrying fluid of about 45-50 °C is introduced into the accumulator vessel 2 at level E, travels through the heat exchanger 9 and exits the accumulator vessel 2 at level F. The heat exchanger 9 may be loaded by energy carrier fluid from solar ray heater 13 and/or with energy carrier fluid from the liquid circuit of heat pump 15.

For simplicity, the energy flows into the energy sources are not shown on the figure. For example, the heat pump 15 is only shown with its two energy delivering circuits, the hot-gas circle (21, 22) and the hot liquid circuit (19, 20). The energy at which the energy carrying fluids entering the heat pump 15 are loaded with may be collected from ambient air, ground heat, nearby water reservoir etc. The energy which is delivered by boiler 16 may come from combusting fossil fuels, waste, biofuels etc.

The flow control valves 27, 28 are temperature sensitive valves that regulate the flow according to the temperature of the fluid in pipes 17 and 100, respectively. When fluid exiting the heat exchanger 9 via pipe 100 has a temperature below 35-40 °C, valve 28 passes the liquid into pipe 18 for heating the liquid in the solar ray collector 13. If the fluid in pipe 100 is hotter than about 35-40 °C, the solar ray collector 13 is by-passed by directing the liquid into pipe 25. Valve 27 will direct incoming fluid with a lower temperature than 45 °C into pipe 19 for heating by heat pump 15 (delivers energy carrying fluid of about 50-55 °C). If the temperature of the fluid entering flow valve 27 is equal to or warmer than 45 °C, the valve will by-pass the heat-pump by directing the liquid directly into heat exchanger 9 at level E.

Temperature sensor 110 will activate pump 120 when it senses that the accumulator liquid inside the sensor has a temperature below 30 °C.

In order to maintain the thermal layering in the accumulator vessel 2, it is important to avoid return of accumulator liquid from heat exchanger 30 with a temperature significantly above the temperature of the bottom thermal layer. The return pipe 5 is therefore equipped with a heat sensitive flow valve that only allows through-flow of accumulator liquid with a temperature of about 30 °C or lower. That is, the valve has an upper cut-of temperature, and only opens when the liquid is sufficiently cold.

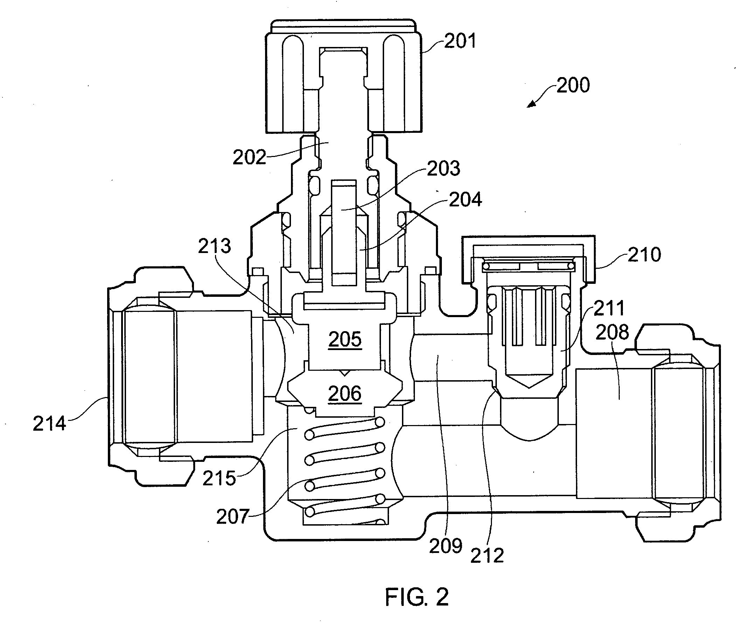

Figure 2 shows a schematic view of an embodiment of a valve with an adjustable upper cut-off temperature suitable for use as return pipe valve 6 in the present invention. The valve in figure 2 has a mechanical temperature adjustment for setting the opening temperature of the valve, comprising a rotate-able handle 201, spindle 202 connected to handle 201 and where the spindle 202 moves up or down when rotating handle 201, pin 203 with piston 204. A body 205 made of a material with a high coefficient of thermal expansion is placed between piston 204 and opening piston 206 placed in pipe section 215. The opening piston is abutting against a spring coil 207, and may move inside the pipe section 215 from an upper open position to a lower closed position where it will shut off the flow channel 215 by abutting against a seat in the flow channel. Fluid is entering the valve 200 through pipe 208, and exits through pipe 214. In order to allow a minimum flow through the valve when the opening piston has closed the main flow channel (pipe section 215), there is a by-pass circuit comprising pipe 209, flow regulator 210, piston 211, and pipe 212 with a seat part for receiving piston 211. The body 205 may be a gas-filled elastic element, an elastic element filled with a liquid with a high coefficient of thermal expansion, or a solid element with a high coefficient of thermal expansion.

A part of the fluid in pipe 208 will enter pipe 212, pass through flow regulator 210, and enter the internal space 213 of pipe section 215 via pipe 209. This causes the body 205 to be in excellent thermal contact with the fluid entering the valve 200. Depending on the temperature of the fluid passing the body 205, it will be compressed or expanded and thus moving the opening piston 206 between the open position and closed position. When the body 205 senses sufficiently cold fluid, it will be compressed to a degree that allows the spring 207 (and the fluid pressure) to lift the opening piston 206 off its seat (closing position) in pipe section 215 and thus open a flow passage from pipe 208, via pipe 215 and into pipe 214. The valve according to figure 2 allows a coarse regulation of the opening temperature through chose of material characteristics of body 205 and spring 207, and a fine regulation through handle 201 and regulator 210.

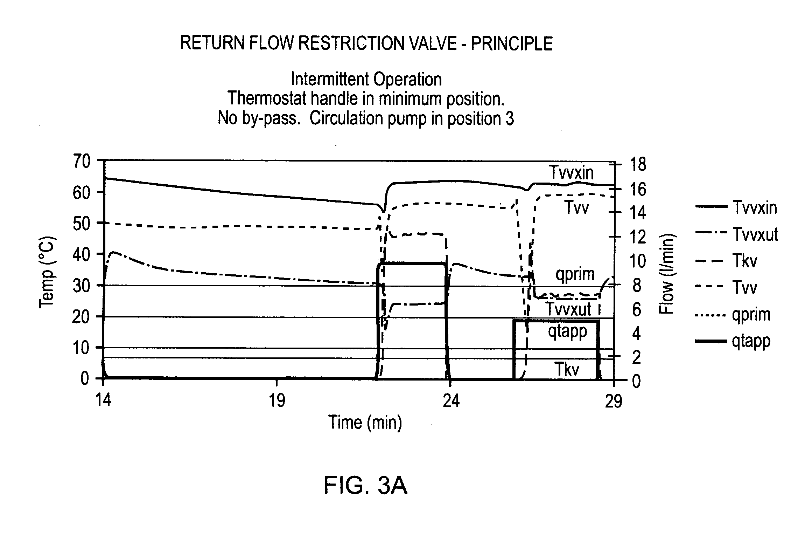

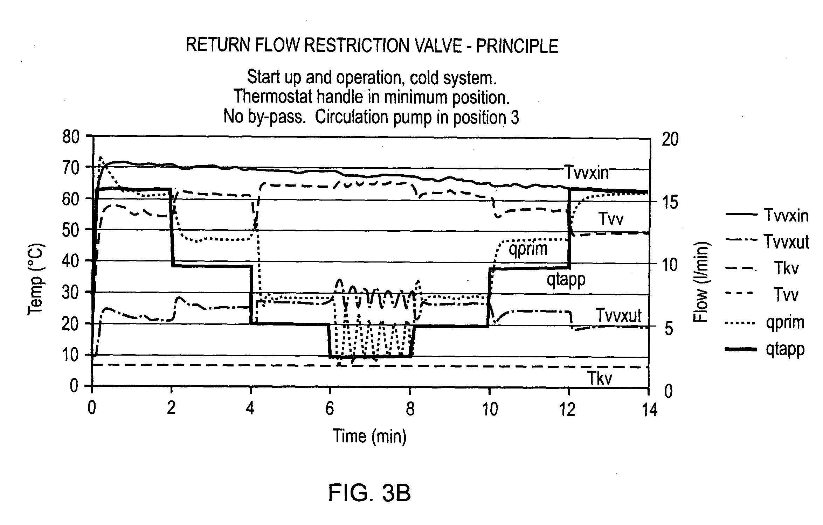

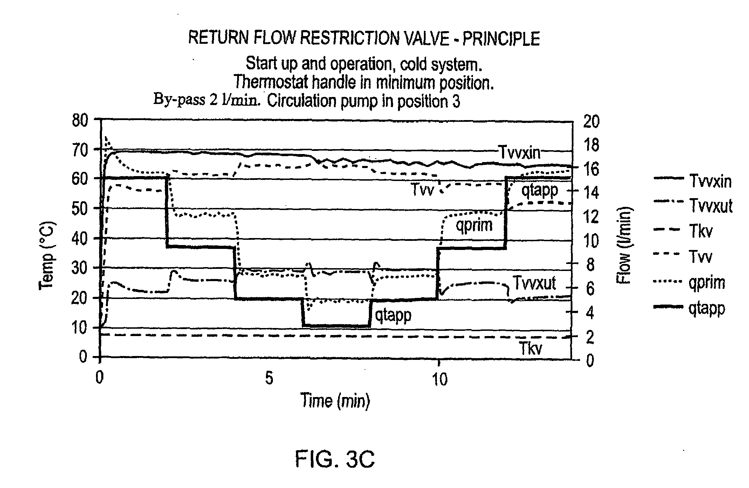

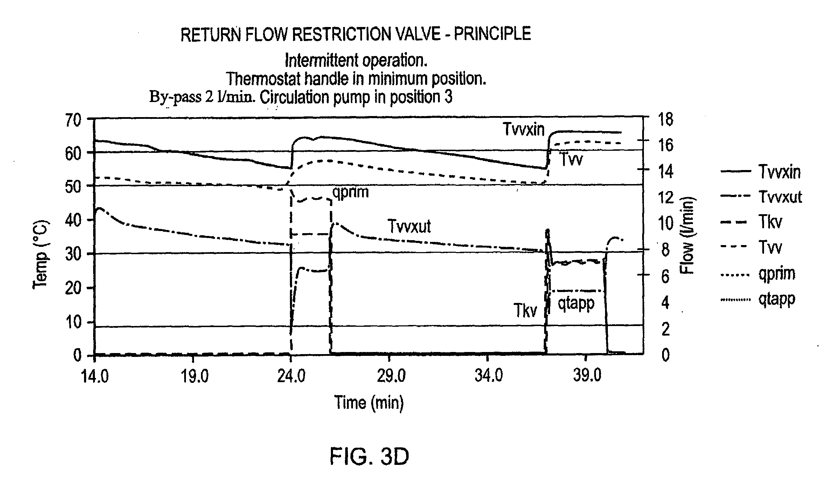

Figures 3 A to D shows test runs of the embodiment shown in figure 1 and 2 with or without use of the minimum flow through valve 6. Figure 3 A and B shows tests without use of the minimum flow, while figures 3 C and D shows similar situations with a minimum flow of 2 litres per minute through valve 6. From figure 3 B it may be seen that the system may be unstable with oscillations in the temperature, Figure 3 C and D shows no such oscillations.

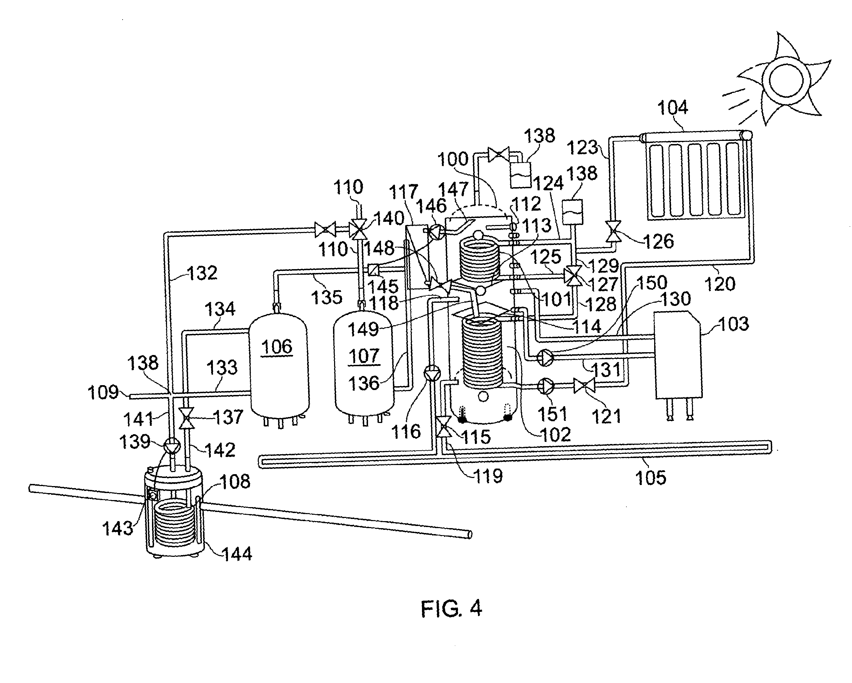

Figure 4 shows another embodiment of the invention, a system for heating and supplying hot water in buildings. In this case the system comprises an accumulator vessel 100 with two heat exchangers 101 and 102 for loading the upper and lower thermal layer respectively. The accumulator vessel may accumulate heat energy from a heat pump 103, a high temperature solar ray heater 104, and/or an electric heating element 112.

The solar ray heater is equipped with a closed energy collector circuit, where energy carrying fluid that has passed through both heat exchangers 101 and 102 is transported through pipe 120 to the solar ray heater 104. Pipe 120 is equipped with heat sensitive valve 121 with an upper cut-off temperature of about 30 °C and pump 122 which provides the necessary fluid pressure in the energy collector circuit. The energy carrying fluid exiting pipe 120 enters the solar ray heater 104 which lifts the temperature of the energy carrying fluid before it enters pipe 123 as hot energy carrying liquid. Pipe 123 is equipped with heat sensitive valve 126 with a lower cut-off temperature of about 70 °C (note, valve 126 is reversed, it only allows through liquid with a sufficient high temperature). From pipe 123, the hot energy carrying fluid enters pipe 124 and into heat exchanger 101 where it loads the accumulating liquid in the upper part of the accumulator vessel 100. After passing through heat exchanger 101, the temperature of the energy carrying liquid is lowered to about 50 °C (may vary at upstart and periods where the accumulator has recently been emptied due to extraordinary high loads) before it enters pipe 125 and enters valve 127 with an upper cut-off temperature of about 55 °C into pipe 128 (only allows through sufficiently cold liquid in order to preserve the thermal layering). From pipe 128 the energy carrying fluid enters the heat exchanger 102 for loading the lower part of the accumulator vessel 100. During the passing through heat exchanger 102, the temperature of the energy carrying liquid is lowered to 30 °C or lower, before it enters pipe 120 for another heat collection cycle.

The heat pump extracts dead water from the accumulator vessel 100 by use of pump 150 in pipe 130. The temperature of the extracted dead water is 40 - 45 °C during normal operation (may be lower at upstart and periods where the accumulator has recently been emptied due to extraordinary high loads). The heat pump 103 heats it to about 50-55 °C and returns the heated dead water to the accumulator vessel through pipe 131. The heat pump is thus integrated with dead water cycle of the accumulator, and supplies primarily heat for the water borne heating system 105.

The electric heating element 112 is placed in the upper thermal layer of the accumulator vessel, and functions primarily as a back-up heat source for use in periods where the solar heat collector 104 is unable to deliver the heat energy required by the user.

Dead water in the mid level thermal layer of accumulator vessel 100, is extracted through pipe 118 (at a temperature of about 50-55 °C) and passed into in a dead-water circuit 105 for use as water-borne heating. After passing through the water-borne heating system, cold dead water is returned to the lower part of the accumulator vessel 100 via pipe 119. Pipe 119 is equipped with a heat sensitive valve 115 with an upper cut-off temperature of about 25 °C. Pipe 118 has a pump 116 which supplies the necessary fluid pressure in the water-borne heating system 105. The water-borne heating system is thus integrated with the dead-water circuit of the accumulator vessel.

The system also comprises a fresh water circuit with one storage vessel 107 for hot fresh water, a storage vessel 106 for medium heated fresh water, a heat exchanger 117 for heating fresh water up to about 65 °C and a heat exchanger 108 for preheating fresh water to about 20 °C or higher. Cold fresh water is supplied via pipe 109. At 138 it enters a three-way connection; cold fresh water may be allowed into pipe 110 for user controlled admixture (via valve 140) with hot fresh water, cold fresh water may be sent via pipe 133 into the lower part of storage vessel 106, or cold fresh water may be sent via pipe 141 to heat exchanger 108 for preheating to at least 20 °C before being sent via pipe 134 into the upper part of storage vessel 106. The heat exchanger 108 may be placed in a grey water outlet etc. A pump 139 is activated when sensor 143 senses i.e. grey water at a temperature of about 30 °C in vessel 144. A heat sensitive valve 137 has a lower cut-off temperature of about 20 °C.

Due to the pressurised cold fresh water inlet 109, preheated water from the upper part of vessel 106 will pass through pipe 135 when the user taps hot water through pipe 110. A flow switch 145 will then engage pump 146 in hot dead water outlet 147 in the upper part of accumulator vessel 100. The hot dead water from the accumulator will enter a first circuit of heat exchanger 117 via outlet 147. The preheated fresh water will flow in the second circuit of heat exchanger 117, and become heat exchanged with the extracted dead water. The dead water in the first circuit will thus be cooled to at least 25 °C and returned to the lower part of the accumulator vessel 100 via pipe 149. A heat sensitive valve 148 in pipe 149 has an upper cut-off temperature of about 25 °C. The fresh water in the second circuit of heat exchanger 117 is heated to about 65 °C, then it is via pipe 136 passed into storage vessel 107. The hot tap water pipe 110 extracts hot water from the top of vessel 107. Vessel 107 is equipped with an electric heating element (not shown on the figure) as a safety precaution in case accumulator vessel fails to deliver hot water, if prolonged storing periods in the vessel 107 results in temperature losses of the water etc. The temperature of the water in storage vessel 107 should be at 65 °C in order to eliminate unwanted biological activity such as legionellacease etc.

The embodiment of the invention shown in figure 4 allows use and exploitation of different energy sources at different temperatures due to the accumulator vessel with thermal layering. The thermal layering is obtained and preserved by use of flow valves (115, 121, 126, 127, and 148) which ensures that heat is exchanged to and from the accumulator vessel at the different connection points at temperatures which corresponds to the thermal layering in the vessel. The valves (115, 121, 127, and 148) have all an upper cut-off temperature, and may be of the type shown in figure 2. The valve 126 and 137 are reversed, they have a lower cut-off temperature and may be of the same type as disclosed in NO 302 054.

The flow of liquids to and from the accumulator vessel 100 may be relatively large in the embodiment shown in figure 4. These large flows may be detrimental to the thermal layering since they induce flows in the bulk liquid phase in the vessel 100. In order to support the thermal layering, there are introduced two plates 113, 114 with square cross-sectional area in the accumulator vessel which has a circular cross-sectional area. Thus small sized channels allowing vertically oriented fluid flows are formed in the peripheral parts, in the space between the cross-sectional plate and the circular wall of the vessel 100.

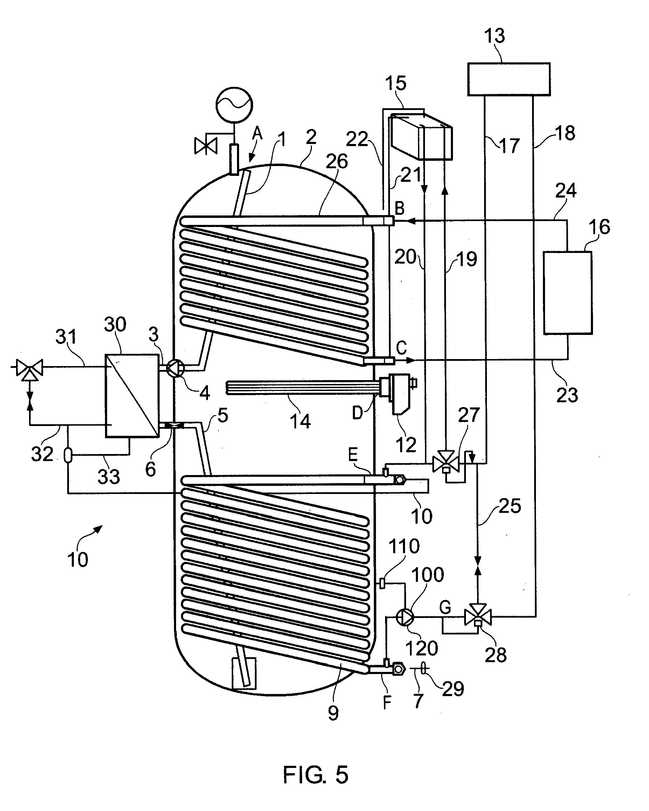

Figure 5 shows an accumulator vessel that is almost identical to the vessel shown in figure 1, except that the heat exchanger 9 comprises a co-axial double helix tube. The inner tube allows introduction of cold fresh water through inlet 7. The cold fresh water will be heated through the passage in the inner helix tube, before it enters via pipe 10 into the fresh water circuit of heat exchanger 30. This embodiment allows heating a larger flow volume of fresh water (larger capacity for supplying hot tap water) than the embodiment shown in figure 1.

## Claims

1. Method for accumulating heat energy for supplying buildings with hot tap water and/or liquid borne heating, wherein the method comprises:
- collecting heat energy from one or more energy sources,
- transferring the collected heat from each energy source to a corresponding energy carrying fluid,
- transporting the collected heat by use of the one or more energy carrying fluids to an accumulator vessel containing a thermal layered accumulator liquid at one or more temperature levels,
- transferring the collected heat energy to the accumulator liquid by heat exchanging each of the one or more energy carrying fluids with accumulator liquid at the thermal layer with a moderately lower temperature than the energy carrying fluid's temperature,
and when supplying accumulated heat energy to the user:
- heat exchanging heated accumulator liquid with an energy carrier that transfers the heat energy to the user in the form of hot tap water and/or liquid borne heating.

2. Method for accumulating heat energy for supplying buildings with hot tap water and/or liquid borne heating, wherein the method comprises:
- collecting heat energy from one or more energy sources,
- transferring the collected heat from each energy source to a corresponding energy carrying fluid,
- transporting the collected heat by use of the one or more energy carrying fluids to an accumulator vessel containing a thermal layered accumulator liquid at one or more temperature levels,
- transferring the collected heat energy to the accumulator liquid by heat exchanging each of the one or more energy carrying fluids with accumulator liquid at the thermal layer with a moderately lower temperature than the energy carrying fluid's temperature,
and when supplying accumulated heat energy to the user(s):
- heat exchanging heated accumulator liquid from the top thermal layer with fresh water for provision of hot tap water and then returning the heat exchanged accumulator liquid to the accumulator vessel at the bottom or intermediate thermal layer with a moderately lower temperature than the returned accumulator liquid, and
- extracting accumulator liquid from an intermediate and/or top layer of the accumulator, passing it to the liquid borne heating system for provision of heating of the building, and then returning the used accumulator liquid to the accumulator at the bottom or intermediate thermal layer with a moderately lower temperature than the returned accumulator liquid.

3. Method according to claim 1 or 2,
wherein the thermal layering in the accumulator vessel is obtained and preserved by applying temperature regulated flow control at the heat injection points in the accumulator vessel.

4. Method according to claim 3,
wherein the return pipes for heat exchanged accumulator liquid are equipped with a heat sensitive valve that only opens for through flow when the temperature of the returned accumulator liquids to be injected at the bottom thermal layer are 25 °C or lower.

5. Method according to claim 3,
wherein the injection of heating medium for loading the lower thermal layer of the accumulator vessel is controlled by a heat sensitive valve that only opens for through flow when the temperature of the returned accumulator liquid is about 45-50 °C or lower.

6. Method according to claim 3,
wherein the injection of heat for loading the upper thermal layer of the accumulator vessel is controlled by a heat sensitive valve that only opens for through flow when the temperature of the returned accumulator liquid is about 65 - 70 °C or higher.

7. Accumulator for accumulating heat energy for supplying buildings with hot water and/or liquid borne heating, wherein the accumulator comprises:
- means for collecting heat energy from one or more energy sources,
- means for forming at least one energy collection fluid circuit for each energy source,
- means for transferring the collected heat from each energy source to the energy carrying fluid in the corresponding energy collection circuit(s),
- an accumulator vessel with a thermal layered accumulator liquid,
- means for heat exchange the one or more energy carrying fluids of the collector circuit accumulator liquid at the thermal layer with a moderately lower temperature than the energy carrying fluid, and
- means for extracting hot accumulator liquid from the accumulator vessel, heat exchanging it with one or more user energy carrying liquids, and injecting the heat exchanged accumulator fluid into the accumulator vessel into a thermal layer with more or less the same temperature as the heat exchanged accumulator liquid.

8. Accumulators for accumulating heat energy for supplying buildings with hot water and/or liquid borne heating, wherein the accumulators comprises:
- means for collecting heat energy from one or more energy sources,
- at least one energy collection fluid circuit for each energy source,
- means for transferring the collected heat from each energy source to the energy carrying fluid in the corresponding energy collection circuit(s),
- an accumulator vessel with a thermal layered accumulator liquid,
- means for heat exchange the one or more energy carrying fluids of the collector circuit accumulator liquid at the thermal layer with a moderately lower temperature than the energy carrying fluid,
and for provision of heat energy to the user(s):
- means for extracting hot accumulator liquid from the top thermal layer, heat exchange this accumulator liquid with fresh water for provision of hot tap water, and then returning the heat exchanged accumulator liquid to the accumulator vessel at a thermal layer with a moderately lower temperature as the returned accumulator liquid, and
- means for extracting accumulator liquid vessel from an intermediate and/or top thermal layer of the accumulator vessel, passing the extracted accumulator liquid to the liquid borne heating system for provision of heating of the building, and then returning the used accumulator liquid to the accumulator at the bottom or intermediate thermal layer with a moderately lower temperature than the returned accumulator liquid.

9. Accumulator according to claim 7, wherein the accumulator comprises three separate liquid circuits:
- one accumulating liquid circuit comprising an accumulator vessel (2), a pipe (1) for supplying hot accumulating liquid from the upper part of the vessel (2) to a hot liquid outlet (3), pump (4) for pumping accumulator liquid through pipe (1), pipe (5) for returning heat exchanged accumulating liquid from cold liquid inlet (6) to the bottom part of vessel (2), heat sensitive valve (6) with an upper cut-off temperature for controlling the flow through pipe (5), and one circuit of heat exchanger (30);
- one tap water circuit comprising fresh water intake (32), the other circuit of heat exchanger (30), and hot water outlet (31); and
- heat collection circuits comprising energy sources (12, 13, 15, 16), heat transfer devices (pipes 17 to 25 and heat exchangers 9 and 26), and flow control devices (heat sensor 110, pump 120 and valves 27, 28).

10. Accumulator according to claims 7-10, wherein the energy sources may be one or more of the following sources: solar heat, geothermal heat, waste heat from combustion processes etc. net grid electricity, remote heating, heat extracted from ambient sources, atmosphere, ground or water by use of a heat-pump.

11. Accumulator according to claims 7 to 9, wherein the heat exchangers (9, 26) are tubular helixes placed in the bottom and upper part of the accumulator vessel (2), respectively, and where the heat exchange between the energy carrying fluid from the energy sources and the accumulator liquid is obtained by passing the energy carrying liquid through the inner tube of the tubular helixes (9, 26).

12. Accumulator according to claim 11, wherein the heat exchanger (9) placed in the lower thermal layer of the accumulator vessel (2), is connected to heat sources (13, 15) delivering a heated energy carrying fluid with a temperature of about 45-50 °C.

13. Accumulator according to claim 12, wherein the heat sources (13, 15) are a solar ray collector and heat-pump, respectively.

14. Accumulator according to claim 11, wherein the heat exchanger (26) placed in the upper thermal layer of the accumulator vessel (2), is connected to heat sources (16) delivering a heated energy carrying fluid with a temperature of about 65-70 °C.

15. Accumulator according to claims 11-14, wherein the heat exchanger (9) is a two-circuit tubular helix with two co-axially tubes, where the inner tube is fed with cold fresh water at inlet (7) before exiting the heat exchanger (9) in a preheated condition via pipe (10), and then passes to heat exchanger (30) for further heating to the tap water temperature.

16. System for heating buildings and providing hot tap water, wherein the system comprises:
- an accumulator vessel (100) filled with dead water and which has heat exchangers (101) and (102) for loading the upper and lower thermal layer of vessel (100), respectively,
- a heat pump (103) extracting dead water from the lower part of the intermediate thermal layer of vessel (100), heating it and reintroduce the dead water into the higher part of the intermediate thermal layer,
- a high temperature solar ray heater (104) for loading the high temperature heat exchanger (101) and the low temperature heat exchanger (102),
- an electric heating element (112),
- a dead-water heating circuit (105), which extracts dead water from the vessel (100) at the intermediate thermal layer and reintroduces the dead water at the bottom level of vessel (100) after passing through the dead-water heating circle (105), and
- a fresh water circuit for supplying hot tap water by heat exchanging fresh water with extracted dead water from the top layer of vessel (100) in heat exchanger (117).

17. System according to claim 17, wherein the accumulator vessel is cylindrically shaped and equipped with two horizontally oriented square plates (113, 114) forming flow restrictions in the vertical direction.

18. System according to claim 16 or 17, wherein the dead-water heating circuit (105) comprises an extraction pipe (118) with pump (116), one or more energy delivering devices for heating the building, and return pipe (119) with flow restriction valve (115) with an upper cut-off temperature of about 25°C.

19. System according to claim 16 or 17, wherein the intermediate thermal layer of vessel (100) is loaded by use of a heat pump (103) which is fed with extracted dead water from vessel (100) by pipe (131) and pump (150), heats the dead water, before it is reintroduced it into vessel (100) by pipe (130).

20. System according to claim 16 or 17, wherein
- the solar ray heater (104) provides hot energy carrying fluid of 65-70 °C and is connected to the inlet of heat exchanger (101) via pipe (123, 124) with flow restriction valve (126) with a lower cut off temperature of about 65-70 °C,
- the outlet of heat exchanger (101) is connected to the inlet of heat exchanger (102) by pipe (125) with flow restriction valve (127) with an upper cut off temperature of about 45 - 50 °C and pipe (128), and
- the outlet of heat exchanger (102) is connected to the solar ray heater (104) via pipe (120) with pump (151) and flow restriction valve (121) with an upper cut-off temperature of about 30 °C.

21. System according to claim 16 or 17, wherein an electric heating element (112) is placed in the upper thermal layer of vessel (100).

22. System according to claim 16 or 17, wherein the fresh water circuit comprises:
- a fresh water supply pipe (109) with three-way pipe branch connector (138),
- pipe (141) for directing fresh water to heat exchanger (108) in pre-heating vessel (144) by use of pump (139),
- pipe (142) with flow restriction valve (137) with an upper cut-off temperature of about 20 °C and pipe (134) for supplying preheated fresh water to storage vessel (106),
- storage vessel (106) with pipe (135) for supplying preheated fresh water to heat exchanger (117),
- storage vessel (107) for storing hot fresh water with tap water pipe (110) and with an electric heating element for ensuring a minimum temperature of the stored fresh water of about 65 °C,
- a pipe (136) for supplying hot fresh water from heat exchanger (117) to storage vessel (107), and
- pipe (132) for user controlled admixture of fresh cold water from pipe (109) with hot fresh water from pipe (110).

23. System according to claim 22, wherein the pipe (135) is equipped with a flow switch (145) which regulates the operation of pump (146) in the pipe (147) for extraction of hot dead water from the top thermal layer of vessel (100) into heat exchanger (117).

24. System according to claim 22, wherein the heat exchanged dead water in heat exchanger (117) is reintroduced at the bottom level of vessel (100) via pipe (149) with flow restriction valve (148) with an upper cut-off temperature of about 25°C.

25. Temperature regulated flow restriction valve, wherein the valve comprises:
- rotate-able handle (201),
- spindle (202) connected to handle (201) and where the spindle (202) moves up or down when rotating handle (201),
- pin (203) with piston (204),
- an opening piston (206),
- a body (205) made of a material with a high coefficient of thermal expansion placed between piston (204) and opening piston (206),
- inlet pipe (208) and exit pipe (214),
- a pipe section (215) intermediate inlet pipe (208) and exit pipe (214) with a seat section for receiving opening piston (206),
- a spring coil (207) abutting against opening piston (206),
- a by-pass circuit comprising pipe (209) connected to the pipe section (215), rotate-able flow regulator (210), piston (211), and pipe (212) with a seat part for receiving piston (211).

26. Flow restriction valve according to claim24, wherein the body (205) is a gas-filled elastic element, an elastic element filled with a liquid with a high coefficient of thermal expansion, or a solid element with a high coefficient of thermal expansion.
